# EUROPÄISCHE PATENTANMELDUNG

(11) **EP 0 998 078 A1**
(43) Veröffentlichungstag der Anmeldung: **03.05.2000**
(21) Anmeldenummer: 98120704.6
(22) Anmeldetag: 30.10.1998
(51) Int. Cl.: H04L 12/28, H04L 29/06

(54) **Konfigurationsverfahren einer Nachrichtenverbindung für eine Datenübertragung**

(71) Anmelder: TELEFONAKTIEBOLAGET LM ERICSSON, 126 25 Stockholm (SE)
(72) Erfinder: Socher, Guido, 52134 Herzogenrath (DE)
(74) Vertreter: Mohsler, Gabriele

(57) **Zusammenfassung**

Die Erfindung betrifft ein Verfahren und eine Vorrichtung zur optimierten Aushandlung von Kommunikationsparameter für eine Übertragung von Daten in Nachrichtenverbindungen. In einer kommunikationsinitialisierenden Vorrichtung wird eine Liste initialisiert und diese während der Verbindungsaufbauphase nacheinander an alle in die Kommunikation involvierten Vorrichtungen gesendet. Jede der Vorrichtungen fügt zu der Liste eigene und am besten geeignete Übertragungsparameter hinzu. Die Parameterliste wird von der letzten in die Verbindung involvierten Vorrichtung zu der kommunikationsinitialisierenden Vorrichtung gesendet und von dieser wird letztendlich eine Auswahl an Übertragungsparametern getroffen. Die auf diese Weise erstellte Parameterliste wird nacheinander an alle in die Übertragung involvierte Vorrichtungen gesendet, um sie über die geltende Parameterwahl zu informieren. Jede Vorrichtung konfiguriert ihre Parametereinstellung für eine entsprechende Verbindung anhand der empfangenen Parameterliste. Somit erfolgt eine Konfiguration der in die Kommunikation involvierten Vorrichtungen für die nachfolgende Datenübertragung.

## Beschreibung

Die Erfindung betrifft ein Verfahren und eine Vorrichtung zur optimierten Aushandlung von Kommunikationsparameter für eine Übertragung von Daten bei Nachrichtenverbindungen.

Eine Nachrichtenverbindung ist eine für eine bestimmte Zeit hergestellte oder dauernd zur Verfügung stehende Kopplung mindestens zweier Endeinrichtungen zum Zwecke des Austauschs von Informationen. Die Informationen sind in Form einer Zeichenfolge von binären Signalen dargestellt. Die Übertragung der Zeichen kann analog oder digital erfolgen. Eine analoge Übertragung erfolgt zum Beispiel in einem herkömmlichen Telefonnetz (sogenanntes Public Switched Telephon Network (PSTN)). Die analoge Übertragung von Daten erfordert jedoch eine Wandlung der binären Signale in tonfrequente Signale, die über die Leitung gesendet werden. Dies wird mit einem Modulationsverfahren realisiert. Beim Empfänger werden die analogen Signale demoduliert und in binären Signale gewandelt. Zu diesem Zweck werden zwischen einer Endeinrichtung und dem analogen Telefonnetz Modems eingesetzt. Die Aufgabe der Modems besteht somit in der Bereitstellung der von der Endeinrichtung gesendeten digitalen Signale an die Übertragungsstrecke, die ein analoges Übertragungsmedium darstellt, und in der Anpassung der empfangenen Signale der Übertragungsstrecke an die physikalischen Bedingungen der Endeinrichtung.

Eine andere Möglichkeit der Datenübertragung besteht unter Einsatz digitaler Vermittlungstechnik. Diese Technik wird zum Beispiel in dem weitverbreiteten ISDN (Integrated Services Digital Network) Netz verwendet. Das Ziel des Netzes ist eine Integration von verschiedenen Telekommunikationsdiensten in einem universellen Nachrichtennetz. Insbesondere bedeutet dies, daß an einem ISDN-Anschluss bis zu acht unterschiedliche oder gleichartige Endeinrichtungen (z.B. Telefon, FAX-Gerät, Rechner, Bildtelefone) über eine einheitliche Schnittstelle angeschlossen werden. Eine weitere Eigenschaft des Netzes ist eine Datenübertragung von 64kbit/s für alle Dienste. Wichtige Standards für die Datenkommunikation über ISDN sind ETS 300 102-1, ITU-T I.411 und ITU-T V.110.

Ein weiteres Netz, das zu der Kategorie der digitalen Netze zugehört, ist das digitale Mobilfunknetz, GSM (Global System tor Mobile Communication). Die nutzbare Datenübertragungsrate beträgt 9.6 kbit/sec pro Kanal. Beim Entwurf des GSM-Systems wurde bereits Wert darauf gelegt, Dienste, die bislang über das herkömmliche Telefonnetz oder ISDN zugänglich waren, auch für GSM-Benutzer zu erschließen. Das betrifft Dienste wie beispielsweise Fax, Rohdatenübermittlung oder den Zugang zu Datennetzen wie Internet. GSM bietet die Möglichkeit eine Verbindung zu einem anderem Teilnehmer in ISDN und PSTN aufzubauen. Um dieser Anforderung gerecht zu werden, müssen Netze unterschiedlicher Art aneinander gekoppelt werden. In diesem Zusammenhang, d.h. der Ankopplung von mehreren Netzen wird der Begriff heterogenes Netz eingeführt und in weiteren für dieses verwendet.

Wie bereits zuvor erläutert, unterscheiden sich die Netze aufgrund der Übertragungsgeschwindigkeit. Darüber hinaus, existiert eine Vielzahl an weiteren Parametern, die entweder eingestellt werden müssen oder optional eingestellt werden können, deren Konfiguration aber einen erheblichen Einfluss auf die Leistungsfähigkeit der Übertragung hat.

Beispielsweise, um einen Gleichlauf der Daten zwischen einem Sender und einem Empfänger sicherzustellen, muß zwischen einem synchronen und asynchronen Trägerdienst gewählt werden. Bei asynchroner Übertragung besteht kein gemeinsamer Zeittakt. Die Synchronisation der Übertragung erfolgt durch Senden von Start- und Stopbits. Diese klammern kleine Datenmengen ein, die beim Sender durch Zerstückelung von ganzen Nachrichten entstanden sind und die beim Empfänger zur ganzen Nachrichten wieder zusammengesetzt werden. Dies verlangt aber eine Vereinbarung zwischen den kommunizierenden Einheiten bezüglich der Übertragungsform. Hierbei kann auch die leistungsfähigere, und zwar die synchrone Übertragungsform, verwendet werden. Bei der synchronen Übertragung wird ein gleicher Zeittakt bei Sender und Empfänger vorausgesetzt. Die Übertragung des Taktes kann auf verschiedene Weise erfolgen, beispielsweise auf einer separaten Taktleitung. Es ist aber somit unabdingbar eine gleiche Einstellung auf beiden Endeinrichtungen vorliegen zu haben. Diese Entscheidung ist vom Benutzer zu treffen, wobei zu beachten ist, daß derzeit die synchrone Übertragungsart den Status eines neuen Dienstes hat, woraus folgt, daß es nicht bei allen Netzanbietern bereits implementiert ist. Dies muß somit vom Benutzer in Erfahrung gebracht werden.

Weitere wichtige Parameter, die notwendigerweise zu vereinbaren sind, wenn in die Übertragung das GSM Netz involviert ist, beziehen sich auf den Übertragungsmodus, insbesondere auf den sogenannten transparenten oder den sogenannten nicht-transparenten Modus. Das wesentliche Unterscheidungsmerkmal liegt darin, daß in dem sogenannten nicht-transparenten Modus zusätzlich zu den normalen fehlerkorrigierenden Mechanismen ein zusätzliches Verfahren zur Korrektur fehlerhaft übertragenen Daten eingesetzt wird. Dies ist von Bedeutung im Falle eines fehlerhaften Übertragungskanals, mit dem das GSM gekennzeichnet ist. Die Wahl des entsprechenden Übertragungsmodus wird vom Benutzer getroffen und ist vom Netzwerk abhängig. Somit wird ebenfalls an diese Stelle eine Erfahrung des Benutzers in Verbindungskonfiguration vorausgesetzt.

Die zwei oben behandelten Dienste - synchron/asynchron und transparent/nicht-transparent - stellen nur ein Teil der Vielzahl von unterschiedlichen Dienste dar. Ihre Anzahl und Art variiert in Abhängigkeit von dem zugrundeliegenden Netz.

Bei der Anpassung der Übertragungsparameter spielt nicht nur das zugrundeliegende Netz, z.B. digital: ISDN, GSM oder analog: PSTN, sondern auch die Art des von der Endeinrichtung verwendeten Endgerätes eine Rolle. Einerseits hängt die Art des Endgerätes von dem zugrundeliegenden Netz, z.B. bei analogen Netzen wird ein Modem und bei digitalen ein Terminal Adapter (TA) eingesetzt. Anderseits gibt es Unterschiede bezüglich der Parameter zwischen den Endgeräten gleicher Art. Die Parameter können beispielsweise aufgrund der Übertragungsgeschwindigkeit variieren, z.B. 14.4 kBits/s, 28.8 kbit/s und 33.3 kBits/s.

Bei der Betrachtung einer heterogenen Verbindung ist in eine Datenübertragung neben den Endgeräten mindestens ein Zwischenknote involviert, dessen Aufgabe in einer Anpassung der angekoppelten Teilstrecken bezüglich der gegebenen Netzcharakteristika besteht. Beispielsweise ist für die Adaption der Übertragungsträger zwischen GSM und externen Netzwerken ein in der GSM Vermittlungsstelle (sogenanntes Mobile Services Switching Center (MSC)) integrierter Bestandteil, genannt InterWorking Funktion (IWF) verantwortlich. Sie konvertiert die unterschiedlichen Modulations- und Signalisierungsverfahren ineinander. Die Methoden der Konvertierung unterscheiden sich aufgrund des zwischen der Interworking Funktion und der folgenden Endeinrichtung angeschlossenen Netzes. Das Zusammenspiel zwischen einem Mobiltelefon und einer InterWorking Fuktion ist in dem Standard GSM 09.07 beschrieben.

Als Problem ergibt sich jedoch, daß für eine Interworking Funktion manchmal schwierig zu unterscheiden ist, ob die folgende Endeinrichtung an ein digitales oder ein analoges Netz eingeschlossen ist. Im allgemeinen erkennt die Interworking Funktion anhand der Art der Vermittlungsstelle an die die Endeinrichtung angeschlossen ist, um welche Art der Endeinrichtung es sich handelt. Dies gelingt jedoch nicht, wenn ein Teilnehmer sich in einem anderen nationalen Netz befindet und die Verbindung über mehrere Netze aufgesetzt wird, bei denen die Zwischenknoten eine andere Signalisierungsarten, genannt National User Part Signalling einsetzen. Diese Art der Vermittlungsknoten unterstützen die Übertragungsgeschwindigkeit von 64 kbit/s, benutzen aber Signalisierungsprotokolle die von ISDN Standard abweichen. Dieses kann zu Problemen bei der Auswahl der Übertragungsparameter durch die Interworking Funktion führen.

Die Endeinrichtungen, darunter sind sowohl die Endgeräte, als auch die zwischenknoten zu verstehen, haben die Aufgabe, eine Parameterübereinstimmung so sicherzustellen, daß eine sichere und stabile Datenübertragung zwischen den kommunizierenden Endeinrichtungen gewährleistet wird. Die Parameterabstimmung zwischen den Endeinrichtungen findet in der Verbindungsaufbauphase statt. Ein Beispiel einer Parameterabstimmung während einer Verbindungsaufbauphase wird im folgenden anhand einer Verbindung zwischen zwei GSM-Teilnehmer vorgestellt.

Zur Datenübertragung mit einem Mobiltelefon muß dieses die Möglichkeit zum Anschluß einer entsprechenden Ein- und Ausgabevorrichtung bieten, so wie die nötigen Protokolle unterstützen. Die Ein- und Ausgabevorrichtung stellt ein Rechner, beispielsweise in Form eines tragbaren Rechners dar. Die Datenübertragung in einer mobilen Umgebung kann auch durch ein spezielles Gerät, in dem die beiden Funktionen, sowohl eines Rechners als auch eines mobilen Telefons integriert sind, realisiert werden. Die Verbindung zwischen den beiden Einrichtungen erfolgt über eine digitale Schnittstelle. Diese Schnittstelle trägt die Bezeichnung einer PCMCIA (Personal Computer Memory Card Industry Association) Karte und ihre Funktion zusammen mit dem Mobiltelefon entspricht im weiteren Sinne der Funktion eines Modems. Dies wird deswegen nur im weiteren Sinne gesehen, da die PCMCIA Karte aufgrund dessen, daß sie zwei digitale Geräte verbindet, keine Modulation und Demodulation durchführt. Die Steuerbarkeit dieser Karte wird durch die Anwendung der unter den Modems standardisierten Programmiersprache, nämlich durch die sogenannte AT-Steuerbefehle erzielt. Die Benutzung der AT-Steuerbefehle gibt dem Benutzer die Möglichkeit der Einstellung der Übertragungsparameter, wie beispielsweise die Einstellung der Modemsart, der Übertragungsgeschwindigkeit, der Übertragungsart (synchron/asynchron). In digitalen Netzen werden diese Einstellungen in die sogenannte Bearer Capability umgesetzt. Das Konzept der Bearer Capability wurde in der Standardisierung des ISDN Netzes eingeführt und bei der GSM Standardisierung an diesen Standard eingepaßt. Die Bearer Capabilities liefern Informationen über die Übertragungsfähigkeit von Daten zwischen den Endeinrichtungen. Die Beschreibung der GSM- Bearer Capability kann aus GSM 04.08 und der ISDN- Bearer Capability aus ETSI Q.931 entnommen werden.

Die Bearer Capability beschreibt somit den Telekommunikationsdienst. Im Falle von GSM werden die durch den Benutzer eingestellte Verbindungsparameter in eine Bearer Capability übersetzt und diese während der Verbindungsaufbauphase in einer Signalisierungsnachricht an die Vermittlungsstelle (MSC) geschickt. In der Vermittlungsstelle wird die Bearer Capability analysiert und in Abhängigkeit von den Präferenzen der Vermittlungsstelle können folgende Fälle auftreten.
Erster Fall: die Verbindung wird abgebrochen. Beim Benutzer kann dieses als eine Indikation für die nicht korrekt eingestellten Parameter angesehen werden. Die Ursache des Abbruchs wird dem Teilnehmer in Form einer knapp gefaßten Information zugeschickt, aus deren die wirkliche Ursache nicht entnommen werden kann, z.B. "carrier not supported". Beim Auftritt dieses Falles wird von einem Benutzer erwartet, es mit einer anderen Parameterbelegung zu versuchen. Diese manuelle Einstellungen und Versuche erfordern in jedem Fall die Kenntnisse des Benutzers.
Zweiter Fall: die Vermittlungsstelle wählt andere Parameter aus, als die, die ihr gesendet wurden. Die neu festgelegten Parameter werden dem Benutzer zugeschickt. Eine Logik im Mobiltelefon entscheidet dann, ob es die Parameter akzeptieren kann oder ob es die Verbindung abbrechen soll.

Im dritten Fall akzeptiert die Vermittlungsstelle die Belegung der Parameter und somit wird die Bereitschaft signalisiert, den vom Benutzer gewünschten Dienst zu unterstützen.

Als Folge der Parameterakzeptanz in der GSM-Vermittlungsstelle, das heißt beim Auftritt des dritten Falls, oder wenn im zweiten Fall die Parameter vom Mobiltelefon akzeptiert werden, wird mit dem Verbindungsaufbauvorgang fortgesetzt, in dem die Interworking Funktion einbezogen wird. In Abhängigkeit von der Übertragungsart, entweder digital oder analog, wird die Verbindung entweder über ein Modem in ein analoges Netz, z.B. PSTN oder über ein ISDN Adapter in ein digitales Netz, z.B. ISDN weiter geschaltet. Falls die Verbindung über ein ISDN Netz geschaltet wird, findet an den Ankopplungspunkten eine Übersetzung der Bearer Capability durch die Interworking Funktion statt. Aufgrund der Tatsache, daß diese Parameter sich in den beiden Netzen bezüglich der verschiedenen Bitsbelegung und bezüglich der verschiedenen Datenfelder voneinander unterscheiden, kann dies entweder zur falschen Parameterübersetzung oder zum Informationsverlust führen. Insbesondere, wird von ISDN das für eine Modemkommunikation charakteristische, sogenannte Autobaunding nicht unterstützt. Die sogenannte Autobaunding-Prozedur erlaubt eine dynamische Aushandlung der Übertragungsgeschwindigkeit und der Modulation. Diese für analoge Endeinrichtungen vorgesehene Prozedur wird aber in dem rein digitalen ISDN Netz nicht unterstützt.

Zum Zeitpunkt der Parameterübersetzung von GSM nach ISDN auf der Seite des anrufenden Teilnehmers ist noch nicht bekannt, ob die Datenverarbeitung im ISDN-Netz enden wird oder an eine Vermittlungsstelle geht, da sich dieses aufgrund der Signalisierung nicht bestimmen läßt. Das Autobaunding wird deshalb durch eine spezielle Bit-Kombination in dem für die Übertragungsgeschwindigkeit verantwortlichen Bearer Capability Feld dargestellt. Für den Fall, daß sich auf der Seite des angerufenen Teilnehmers eine GSM Vermittlungsstelle befindet, werden die Informationsfelder der Bearer Capability wieder zurückübersetzt. Dabei wird die spezielle Bit-Kombination für Autobaunding so interpretiert, daß die höchstmöglich unterstütze Datenrate des angerufenen Teilnehmers genommen wird. Die maximal mögliche Datenrate des anrufenden Teilnehmers ist aber nun unbekannt, da das für die Übertragungsgeschwindigkeit verantwortliche Bearer Capability Feld mit der Information Autobaunding belegt ist. Wird zudem der transparente Übertragungsmodus gewählt, so wird die Datenverbindung scheitern, wenn der angerufene Teilnehmer eine höhere Datenrate unterstützt als der anrufende. Der sogenannte nicht-transparente Modus erlaubt eine Zwischenspeicherung und ein Puffern der Daten in der Interworking Funktion, wenn sich die Übertragungsgeschwindigkeit der Sende- und Empfangseinrichtungen voneinander unterscheiden. Wenn aber die Einstellung auf den transparenten Modus vorgenommen wird, dann ist keine Zwischenspeicherung der Daten zugelassen und bei unterschiedlicher Übertragungsgeschwindigkeit kann dies zur Anstauung der Daten und damit implizierten Datenverlust führen. In der Verbindungsaufbauphase wird das aber als Problem erkannt, dessen Resultat ein Abbruch der Verbindung ist.

Ist aber die Verbindung zwischen einem mobilen Teilnehmer und der entsprechenden Interworking Funktion (IWF) erfolgreich aufgebaut, beginnt eine Parameteraushandlung zwischen dieser Vermittlungsstelle und dem Zielteilnehmer. Die Parameter werden in einer Signalisierungsnachricht an das Mobiltelefon des angerufenen Teilnehmers geschickt und diese kann entscheiden, ob die Parameter akzeptiert oder geändert werden sollen. Die gegebenenfalls geänderten Parameter werden zurück zur Vermittlungsstelle des Zielteilnehmers geschickt und diese kann sie akzeptieren oder die Verbindung abbrechen. Danach gelten die Endeinrichtungen als verbunden, d.h. das Netz, beispielsweise kann es sich auch um ein heterogenes Netz handeln, ermöglicht den Nachrichtenaustausch zwischen der verbindungsinitialisierenden Einrichtung und der Zieleinrichtung.

Bei heterogenen Verbindungen, bei denen verschiedene Netze und Endeinrichtungen in die Nachrichtenübertragung involviert sind, ist es aufgrund der verschiedenen Parameter, die im Voraus bekannt und richtig konfiguriert werden müssen, schwierig, eine stabile und sichere Verbindung zwischen zwei Endeinrichtungen aufzusetzen. Die Inkompatibilität zwischen den unterschiedlichen Netzen bezüglich der Übertragungsparameter, führt häufig zum Abbruch des Verbindungsaufbaus. Damit ein erfolgreicher Verbindungsaufbau durchgeführt wird, ist es derzeit erforderlich alle Parameter des Netzes und der Gegenstelle zu kennen. Somit wird eine Erfahrung des Benutzers im Bereich Verbindungskonfiguration vorausgesetzt. Auf der anderen Seite werden nicht alle Dienste von allen Netzanbietern unterstützt. Beispielsweise, gilt derzeit die synchrone Übertragungsart als ein neuer Dienst und dies hat zur Folge, daß es nicht bei allen Netzanbietern implementiert ist. Dies muß von einen Benutzer ebenfalls vor einem Verbindungsaufbauwunsch in Erfahrung gebracht werden.

In den meisten Fällen, in denen es zum Verbindungsabbruch kommt, besteht keine Möglichkeit einer Fehleranalyse. Das bedeutet, daß der Benutzer nicht in der Lage ist Informationen über die Fehlerursache zu erhalten, da die vom Netz gesendete Fehlermeldungen einen niedrigen Informationsgehalt aufweisen. Nach Erhalt solcher Informationen kann der Benutzer nur intuitiv versuchen mit anderen Parametern eine neue Verbindung aufzubauen.

Demgemäß ist es die Aufgabe der vorliegenden Erfindung eine Methode und eine Vorrichtung zu schaffen, die eine Verbindung zu jeder Zieleinrichtung aufsetzt mit der Gewährleistung einer optimierten Übertragung. Insbesondere ist es die Aufgabe der Erfindung eine Verbindung zu einer Zieleinrichtung aufzubauen, deren Parameter nicht bekannt sind, ebenfalls mit der Gewährleistung einer optimierten Übertragung.

Dies wird erfindungsgemäß gelöst durch die Lehre des Patentanspruches 1 und durch die Lehre des Patentanspruches 14.

Vorteilhaft erweist sich hierbei, daß durch die Analyse der bei der kommunikationsinitialisierenden Einheit angekommenen Parameterliste eine Bestimmung von Nachrichtenverbindungsengpässe und -fehlern erfolgt. Dies kann sich insbesondere als vorteilhaft für Netzbetreiber erweisen, denn somit sind sie in der Lage genauere Fehlerinformationen an Benutzer zu versenden.

Ebenfalls vorteilhaft erweist sich hierbei, daß eine Nachrichtenverbindung über ein heterogenes Netz aufgesetzt wird.

Ein weiterer Vorteil ist, daß eine nachfolgende Verbindung zur gleichen Zieleinrichtung optimiert wird, indem die Parameterbelegung der einmal aufgesetzten Verbindung abgespeichert wird und beim nächsten Verbindungsaufbau wieder benutzt wird.

Ein weiterer Vorteil ist ebenfalls, daß dieses Protokoll nicht die Art und Anzahl der für die Aushandlung zugelassenen Parameter definiert. Mit diesem Protokoll werden auch Parameter ausgehandelt, die nur für eine Teilverbindung, z.B. nur für GSM spezifisch sind.

Ein weiterer Vorteil ist ebenfalls, daß durch die Unabhängigkeit des Protokolls von den in die Übertragung involvierten Vorrichtungen eine Aktualisierung einer Vorrichtung in bezug auf Software oder Hardware vorgenommen wird ohne die Funktionalität des ganzen Systems beanspruchen zu müssen.

Ebenfalls vorteilhaft erweist sich hierbei, daß ein in der Konfiguration einer Nachrichtenverbindung unerfahrener Benutzer eine Nachrichtenverbindung zu jeder beliebten Zieleinrichtung aufsetzen kann.

Weitere Vorteile der Erfindung ergeben sich aus den abhängigen Ansprüchen 2 bis 13

Im folgenden wird die Erfindung anhand von Ausführungsbeispielen, Tabellen und Figuren näher erläutert.

Folgende Figuren zeigen:
- Fig.1:: Ablaufdiagramm eines erfindungsgemässen Verfahrens nach Anspruch 1,
- Fig.2a,b,c:: Darstellung eines erfindungsgemässen Ausführungsbeispieles,
- Fig.3:: Darstellung eines Anwendungsbeispieles für eine Kommunikation zwischen zwei GSM Benutzern,
- Fig.4:: Darstellung eines Anwendungsbeispieles für eine Kommunikation zwischen einem GSM und einem herkömmlichen Telefonnetz,
- Fig.5:: Darstellung eines Anwendungsbeispieles für eine Kommunikation zwischen einem herkömmlichen Telefonnetz und einem GSM Netz.

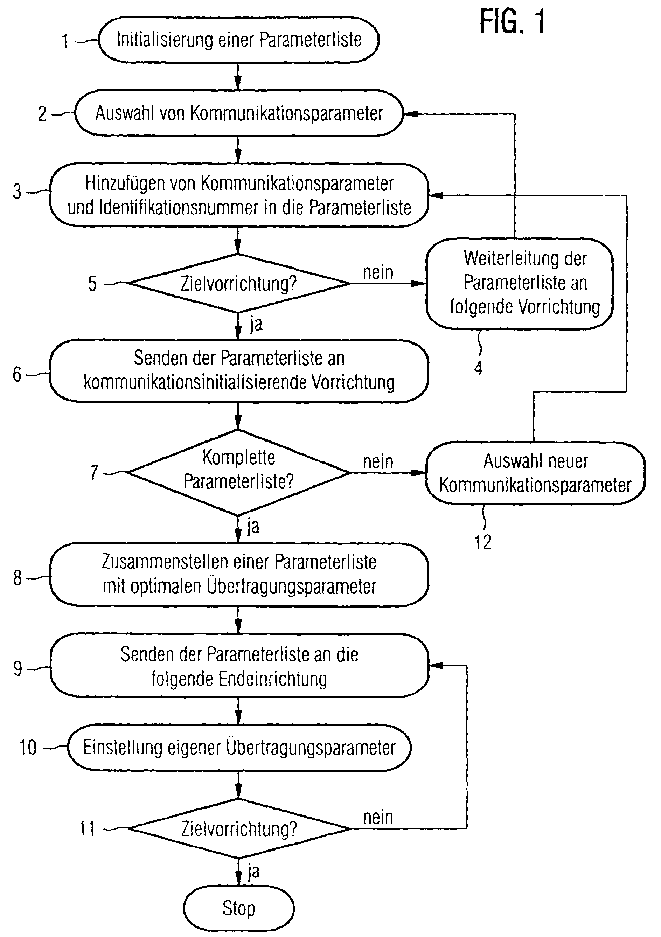

Im folgenden wird die Erfindung anhand eines Ausführungsbeispieles und anhand der Figur 1 erläutert. Hierbei ist zu vermerken, daß der Begriff "kommunikationsinitialisierende Vorrichtung" im folgenden gleichbedeutend mit "erste Vorrichtung" verwendet wird.

In einem Verfahren zur optimierten Aushandlung von Kommunikationsparameter für eine Übertragung von Daten bei Nachrichtenverbindungen wird gemäß Figur 1 in einem ersten Schritt 1 eine Parameterliste in einer ersten Vorrichtung bereitgestellt. Hierbei wird eine in Hinsicht auf die Übertragungsmöglichkeiten dieser Vorrichtung optimale Kombination der Parameter ausgewählt, Schritt 2. Diese Parameter werden in die bereitgestellte Liste hinzugefügt, Schritt 3 und folglich wird diese zusammen mit der diese Einheit identifizierenden Nummer, die sogenannte ID an die nächste Kommunikationsvorrichtung weitergeleitet, Schritt 4. Dies erfolgt nachdem überprüft wurde, ob eine Zielvorrichtung schon erreicht wurde, Schritt 5. Wurde diese noch nicht erreicht, wird die Parameterliste weitergereicht. Jede Kommunikationsvorrichtung fügt zu der empfangenen Liste ihre Kommunikationsparameter und ihre ID hinzu. Hierbei ist zu beachten, daß die Einträge der empfangenen Liste nicht modifiziert werden, sondern daß die neuen Parameter an das Ende der Liste angehängt und somit hinzugefügt werden. Beim Empfang der Liste wird zuerst überprüft, ob die bereits vorhandenen Parameter von dieser Einheit unterstützt werden. Im Falle von Inkompatibilität versucht die Vorrichtung sich mit der besten Parameterwahl an die bereits vorhandenen Parameter anzupassen. Erscheint eine Vereinbarung der Parameter als nicht möglich, so wird dies in der Liste durch einen Eintrag gekennzeichnet unter der Angabe der von dieser Einrichtung unterstützen Einstellungen.

Die Parameterliste kann als eine Datenstruktur angesehen werden, die bei jeder Endeinrichtung dynamisch aufgrund der sich vergrößernden Anzahl von Daten verwaltet wird. Die Übertragung kann beispielsweise im Form eines einfachen ASCI-Textes erfolgen. Dieser kann in eindeutig identifizierbare Pakete verpackt werden, dessen Format dem Format der sogenannten PPP (Point to Point Protokol) Paketen entsprechen kann. Das sogenannte PPP Protokoll ist ein Standardprotokoll, das zum Übertragen von Datenpaketen eingesetzt wird. Somit kann das durch die Erfindung vorgeschlagene Verfahren zur Aushandlung von Übertragungsparametern in die PPP Phase eines Verbindungaufbaus integriert werden. Diese Ausführungsform soll aber nur als Beispiel betrachtet werden.

Gemäß Figur 1 wird die Übermittlung der Parameterliste so lange, fortgesetzt, bis die Zielvorrichtung erreicht wird, Schritt 5. Beim Empfang der Parameterliste fügt die Zielvorrichtung ihre Kommunikationsparameter und ihre ID zu der Liste hinzu und stellt eine komplette Parameterliste bereit. Folglich wird diese an die kommunikationsinitialisierenden Vorrichtung gesendet, Schritt 6. Anhand der in der Liste enthaltenen Parameter wird in dieser Vorrichtung eine Entscheidung getroffen, ob eine Verbindung über alle in die Kommunikation involvierten Einrichtungen möglich ist, Schritt 7. Im Falle eines positiven Ergebnisses, wird eine optimale Auswahl an Übertragungsparametern durchgeführt, Schritt 8.

Nach der getroffenen Auswahl wird eine komplette Parameterliste bereitgestellt und an die folgende in die Übertragung involvierte Einrichtung gesendet, Schritt 9, um sie über die getroffene Auswahl zu informieren. Diese Information wird folglich nacheinander an alle Einrichtungen übermittelt. Jede Vorrichtung konfiguriert ihre Parametereinstellung für eine entsprechende Verbindung anhand der empfangenen Parameterliste, Schritt 10. Somit erfolgt eine Konfiguration der in die Kommunikation involvierten Vorrichtungen. Nach erfolgreich abgeschlossener Einstellung der Übertragungsparameter bei allen Vorrichtungen Schritt 11, erfolgt die Datenübertragung.

Im Falle, daß die kommunikationsinitialisierende Vorrichtung nicht in der Lage ist, eine Auswahl an funktionsfähigen Übertragungsparametern bereitzustellen, initiiert sie wieder eine Parameteraushandlungsphase mit einem neuen Vorschlag an Übertragungsparameter, Schritt 12.

Theoretisch betrachtet, kann die Anzahl der Versuche ins Unendliche gehen, es sei denn, eine von den in die Übertragung involvierten Endeinrichtungen nach einer festgelegten Anzahl an Fehlversuchen den Abbruchwunsch indiziert. Diese Information wird an die kommunikationsinitialisierende Vorrichtung und an die Zielvorrichtung verschickt mit der Implizierung des Abbruchs der Verbindungsaufbauphase. Aus den im Hintergrund laufenden Überwachungsdateien werden Reports über den Ablauf und Abbruch der Verbindung erzeugt, die von den involvierten Teilnehmern benutzt werden können, um die Ursache des Problems zu finden.

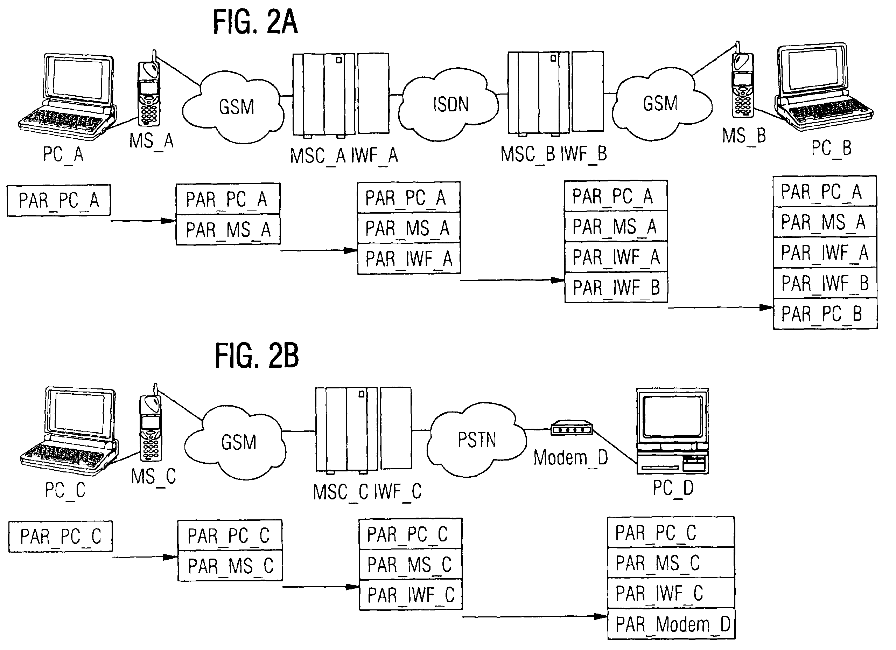

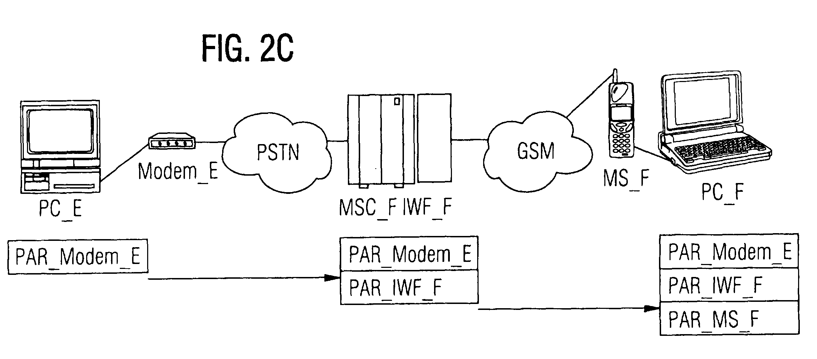

Ein Anwendungsbeispiel für eine Vorrichtung für eine optimierte Aushandlung von Kommunikationsparameter bei einer Übertragung von Daten zwischen kommunikationsinitialisierenden Benutzer USER_A, und einer Zielvorrichtung USER_B wird im folgenden anhand der Figuren 2 a,b,c näher erläutert.

Gemäß Figur 2a wird zuerst von einem Mittel zur Initialisierung einer Parameterliste, die in der kommunikationsinitialisierenden Vorrichtung USER_A enthalten ist, eine Liste bereitstellt. Zu dieser Liste werden, durch den Einsatz von Mitteln zum Hinzufügen von eigenen Kommunikationsparametern, eigene Parameter PAR_USER_A eingefügt. Diese Liste wird unter der Verwendung eines ersten Sendemittels an eine folgende Vorrichtung ADAP_A gesendet. Ein Mittel zum Empfangen, das in jeder Vorrichtung bereitgestellt wird, empfängt diese Liste und leitet sie an ein Mittel zur Auswertung weiter. Dieses entscheidet über die Kompatibilität der eigenen Parameter und der Parameter, die in der Liste enthalten sind. Die Realisierung der Mittel zur Auswertung einer Parameterliste kann in Form von Software erfolgen, wobei verschiedene Möglichkeiten an Auswahlkriterien bereitgestellt werden können. Die Mittel zur Auswertung können sich nach den von ihnen festgelegten Parametern orientieren und überprüfen, ob die in die Kommunikation involvierte Vorrichtungen mit den vorgeschlagenen Parametern Übereinstimmen. Eine andere Möglichkeit bei der Auswahl ist, die Entscheidung auf die Mehrheit zu beziehen. Dies bedeutet, es wird festgestellt in wie vielen Fällen die gleiche Belegung bezüglich eines Parameters gemacht wurde. In jedem Fall wählt die Einheit aber nur Parameter, die von ihr auch unterstützt werden.

Gemäß Figur 2a wird die Liste so lange ergänzt und weitergeleitet bis die Zielvorrichtung USER_B erreicht ist. Hierbei wird die Parameterliste über ein Zwischenknoten, InterNod und über einen weiteren Adapter, ADAP_B bis zur Zielvorrichtung PC_B geleitet. Sowohl der Zwischenknoten, InterNod als auch der weitere Adapter, ADAP_B fügen eigene Kommunikationsparameter PAR_InterNod und PAR_ADAP_B hinzu.

Gemäß Figur 2b, die zeitlich auf die in Figur 2a ausgeführten Schritte folgt, wird in einer Zielvorrichtung USER_B die empfangene Liste unter Einsatz eines zweiten Sendemittels an die kommunikationsinitialisierende Vorrichtung gesendet. Nach dem Empfang der Liste in der kommunikationsinitialisierenden Einheit, wird diese an Mittel zur Auswahl weitergeleitet. Die Aufgabe dieser Mittel ist es, zuerst festzustellen, ob eine Verbindung mit den in der Liste enthaltenen Parametern über alle in die Kommunikation involvierten Einrichtungen möglich ist. Im Falle, daß eine optimierte Auswahl an Parametern von den Mitteln zur Auswahl mindestens eines Kommunikationsparameters getroffen wird, wird eine optimierte Parameterliste ParList, erstellt und gemäß Figur 2c nacheinander an alle in die Kommunikation involvierte Vorrichtungen gesendet. Figur 2c folgt demgemäß zeitlich auf Figur 2b. Nach Empfang der Parameterliste wird diese an die Mittel zur Konfiguration versendet, deren Aufgabe in der Konfiguration der Übertragungsparameter für die entsprechende Datenübertragung besteht.

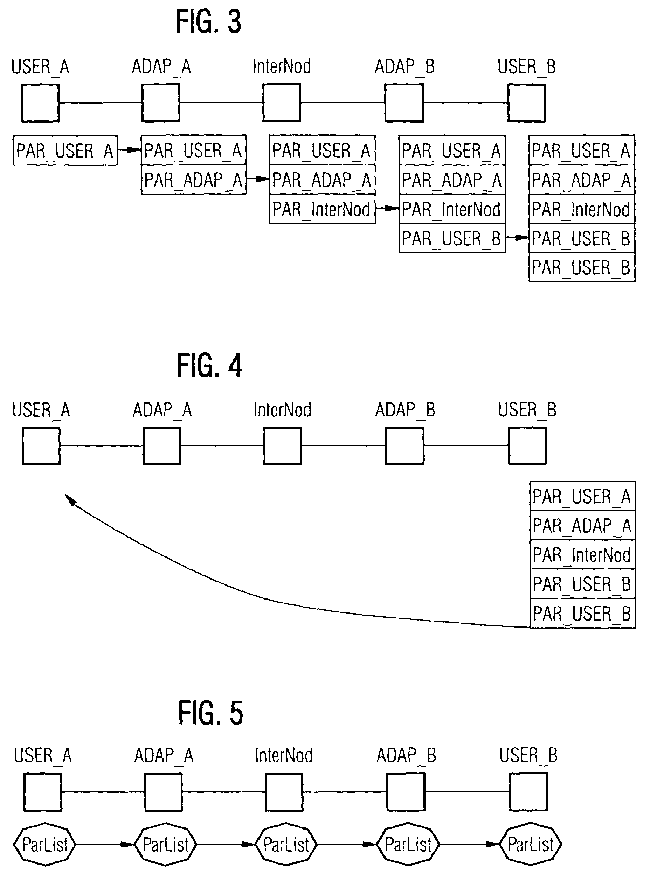

Im folgenden wird ein Anwendungsbeispiel der Erfindung mittels Figur 3 und Tabelle 1 beschrieben.

Die Figur 3 stellt ein Anwendungsbeispiel bezüglich der Erfindung für eine Parameteraushandlung zwischen zwei GSM-Benutzer dar. Die Tabelle 1 stellt ein Beispiel der möglichen Kommunikationsparameter, die von der jeweiligen Endeinrichtung gewählt werden können.

| Bezeichnung der Parameter | Übertragungsparameter der jeweiligen Vorrichtung, gekennzeichnet durch ID |
|---|---|
| PAR_PC_A | Nutzdatenrate: 9. 6kbit/s |
| | Anzahl der Datenbits: 8 |
| | Parität: keine |
| | Anzahl der Stopbits: keine |
| | duplex: voll duplex |
| | ID: PC_A |
| PAR_MS_A | Übertragungsart der Informationen:3.1 khz |
| | Kanalanforderung: volle Rate |
| | duplex: voll duplex |
| | sync/async: asynchron |
| | Nutzdatenrate: 9.6 kbit/s |
| | Anzahl der Datenbits: 8 |
| | Parität : keine |
| | GSM-Zwischenrate: 16kbit/s |
| | Modemtyp: V.32 |
| | Anzahl der Stopbits: keine |
| | Verbindung: nicht-transparent |
| | ID:PCMCIA_A |
| PAR_IWF_A | Übertragungsart der Informationen:3.1 khz |
| | Übertragungsmodus: circuit |
| | ISDN-Übertragungsrate: 64kbit/s |
| | sync/async: asynchron |
| | Nutzdatenrate: 9.6 kbit/s |
| | Anzahl der Datenbits: 8 |
| | Parität : keine |
| | duplex: voll duplex |
| | Anzahl der Stopbits: keine |
| | ID: IWF_A |
| PAR_IWF_B | Übertragungsart der Informationen:3.1 khz |
| | Kanalanforderung: volle Rate |
| | duplex: voll duplex |
| | sync/async: asynchron |
| | Nutzdatenrate: 9.6 kbit/s |
| | Anzahl der Datenbits: 8 |
| | Parität : keine |
| | GSM-Zwischenrate: 16kbit/s |
| | Anzahl der Stopbits: keine |
| | Verbindung: nicht-transparent |
| | ID: IWF_B |
| PAR_MS_B | Nutzdatenrate: 9. 6kbit/s |
| | Anzahl der Datenbits: 8 |
| | Parität: keine |
| | Anzahl der Stopbits: keine |
| | duplex: voll duplex |
| | ID: PCMCIA_B |

Der kommunikationsinitialisierende Benutzer PC_A initiiert eine Verbindung, in dem eine Liste mit dessen Kommunikationsparameter PAR_PC_A erstellt wird und an die PCMCIA Karte gesendet wird. Das ist die Vorrichtung, die die Datenübertragung zwischen einem Rechner und einem Mobiltelefon gewährleistet. Aufgrund dessen, daß, ihre Parametereinstellung von dein angeschlossenen Mobiltelefon abhängt, ist sie in Figur 3 nicht explizit aufgeführt und wird im folgenden im Zusammenhang mit dem Mobiltelefon betrachtet.

Zu der empfangenen Liste fügt die PCMCIA Karte ihre eigenen Parameter PAR_MS_A hinzu.

Folglich werden diese Daten in Form einer Liste an die Vermittlungsstelle MSC_A gesendet. An dieser Stelle, insbesondere in dem InterWorking Funktion-Teil IWF_A der Vermittlungsstelle finden eine Übersetzung und eine Anpassung der Parameter an die Übertragungstechnik des angeschlossenen Netzes statt. In diesem Ausführungsbeispiel ist es ein ISDN Netz. Aufgrund der digitalen Übertragungstechnik von ISDN erfolgt in dem Konvertierungsknoten (Interworking Funktion) eine Übersetzung der Bearer Capability von GSM nach ISDN.

Zusätzlich werden in der InterWorking Funktion IWF_A eigene Übertragungsparameter hinzugefügt PAR_IWF_A.

Weiterhin wird diese Liste an die für die mobile Zieleinrichtung verantwortliche Vermittlungsstelle MSC_B weitergeleitet. Hier findet wieder eine Parameteranpassung zwischen der ankommenden ISDN-Verbindung und der GSM Vermittlungsstelle statt. In dieser Anwendungsform kann die Interworking Funktion IWF_B anhand der Identifikationsbezeichnungen der bereits erreichten Endeinrichtungen feststellen, daß es sich um eine symmetrische Verbindung handelt. Das heißt, aufgrund dessen, daß die Kommunikation zwischen zwei GSM Teilnehmer stattfindet, die über ein ISDN Netz miteinander verkoppelt sind, entsteht eine Symmetrie in den in die Verbindung einbezogenen Vorrichtungen. Trotz der Symmetrie wird ebenfalls an dieser Stelle eine Überprüfung der bereits vorgeschlagenen Parameter vorgenommen.

Nach dem Überprüfen wird die Liste an eine PCMCIA-Karte MS_B versendet. Diese ist folglich die letzte, die über die Konfigurationsparameter zu entscheiden hat, und somit nach dem Zufügen der eigenen Parameter PAR_MS_B wird die komplette Parameterliste an die kommunikationsinitialisierende Vorrichtung PC_A gesendet. Wichtig ist, daß Informationen niemals überschrieben werden. Es werden immer nur Informationen hinzugefügt. Somit wird gesichert, daß keine Information verlorengeht.

Die Tabelle 1 kann als eine komplette Liste, die an die kommunikationsinitialisierende Vorrichtung PC_A verschickt wird, betrachtet werden.

Nach Erhalt einer Parameterliste entscheidet die kommunikationsinitialisierende Vorrichtung, welche Zusammenstellung der Parameter am besten den Verbindungsgegebenheiten entspricht. In diesem Fall vergleicht die kommunikationsinitialisierende Vorrichtung alle die von den in die Verbindung involvierten Endeinrichtungen gesetzten Parameter, um eine optimale Kombination zusammenzustellen. Die unten aufgeführte Tabelle stellt ein Beispiel der von der kommunikationsinitialisierenden Vorrichtung ausgewählten Parameter dar. In diesem Beispiel kommt es zu keinerlei Konflikten. Die Liste der Parameter ist also einfach die Summe aller einzelnen Parameter:

| Endgültige Parameterliste |
|---|
| Nutzdatenrate: 9.6 kbit/s |
| Anzahl der Datenbits: 8 |
| Parität : keine |
| duplex: voll duplex |
| Anzahl der Stopbits: keine |
| Übertragungsart der Informationen:3.1 khz |
| Übertragungsmodus: circuit |
| Kanalanforderung: volle Rate |
| sync/async: asynchron |
| GSM-Zwischenrate: 16kbit/s |
| ISDN-Übertragungsrate: 64kbit/s |
| Art der Verbindung: nicht-transparent |

Nach der vollständigen Zusammenstellung der Parameter wird die Liste an alle in die Verbindung involvierte Einheiten versendet. Jede Einheit entnimmt aus der empfangenen Tabelle nur die für sie relevante Einträge, aufgrund welcher die Konfiguration der Verbindung für die nachfolgende Datenübertragung vorgenommen wird.

Gemäß Figur 4 wird ein weiteres Anwendungsbeispiel der Erfindung dargestellt. In diesem Fall handelt sich um eine Verbindung zwischen einem GSM-Netz PC_C und einem analogen Telefonnetz PC_D. Im Gegensatz zu dem oben aufgeführten Beispiel, notiert die Interworking Funktion IWF_A, daß die Verbindung zu einem analogen Teilnehmer aufzusetzen ist, und dies veranlaßt sie zur Auswahl von Parameter PAR_IWF_C, die auf eine analoge Leitung bezogen sind. Insbesondere bedeutet dies, daß in der Interworking Funktion eine Konvertierung der digitalen Signale in analoge stattfindet. Dafür ist ein in der Interworking Funktion eingebautes Modem verantwortlich. Deswegen beinhalten die Parameter PAR_IWF_C den Modemtyp.

| Bezeichnung der Parameter | Übertragungsparameter der jeweiligen Vorrichtung, gekennzeichnet durch ID |
|---|---|
| PAR_PC_C | Nutzdatenrate: 9. 6kbit/s |
| | Anzahl der Datenbits: 8 |
| | Parität: keine |
| | Anzahl der Stopbits: keine |
| | duplex: voll duplex |
| | ID: PC_A |
| PAR_MS_C | Übertragungsart der Informationen:3.1 khz |
| | Kanalanforderung: volle Rate |
| | duplex: voll duplex |
| | sync/async: asynchron |
| | Nutzdatenrate: 9.6 kbit/s |
| | Anzahl der Datenbits: 8 |
| | Parität : keine |
| | GSM-Zwischenrate: 16kbit/s |
| | Modemtyp: V.32 |
| | Anzahl der Stopbits: keine |
| | Verbindung: nicht-transparent |
| | ID: PCMCIA_A |
| PAR_IWF_C | Modemtyp: V.32 |
| | Nutzdatenrate: 9.6 kbit/s |
| | sync/async: asynchron |
| | Anzahl der Datenbits: 8 |
| | Parität : keine |
| | Anzahl der Stopbits: keine |
| | duplex: voll duplex |
| | ID: IWF_A |
| PAR_Modem_D | Nutzdatenrate: 9. 6kbit/s |
| | Anzahl der Datenbits: 8 |
| | Parität: keine |
| | Anzahl der Stopbits: keine |
| | duplex: voll duplex |
| | ID: Modem_B |

Ein weiteres Ausführungsbeispiel wird anhand der Figur 5 und Tabelle 3 erläutert. Es stellt eine Anwendung vor, bei der ein PSTN-Benutzer PC_E zu einem GSM-Benutzer PC_F eine Verbindung aufstellt. Die komplette Parameterliste ist in der folgenden Tabelle präsentiert.

| Bezeichnung der Parameter | Übertragungsparameter der jeweiligen Vorrichtung, gekennzeichnet durch ID |
|---|---|
| PAR_Modem_E | Nutzdatenrate: 32kbit/s |
| | Anzahl der Datenbits: 8 |
| | Parität: keine |
| | duplex: voll duplex |
| | Anzahl der Stopbits: keine |
| | Modemtyp: autobaunding |
| | ID: PC_A |
| PAR_IWF_F | Übertragungsart der Informationen:3.1 khz |
| | Kanalanforderung: volle Rate |
| | duplex: voll duplex |
| | sync/async: asynchron |
| | Nutzdatenrate: 9.6 kbit/s |
| | Anzahl der Datenbits: 8 |
| | Parität : keine |
| | GSM-Zwischenrate: 16kbit/s |
| | Verbindung: nicht-transparent |
| | Anzahl der Stopbits: keine |
| | Modemtyp: V.32 |
| | ID: IWF_B |
| PAR_MS_F | Nutzdatenrate: 4.8kbit/s |
| | Anzahl der Datenbits: 8 |
| | Parität: keine |
| | Anzahl der Stopbits: keine |
| | duplex: voll duplex |
| | ID: PCMCIA_B |

Wie aus der Tabelle 3 PAR_Modem_E zu entnehmen ist, verfügt der PSTN-Benutzer über ein Modem, dessen Übertragungsgeschwindigkeit 32kbit/s beträgt. Zusätzlich ist als Modemtyp das Autobaunding eingestellt.

Diese Parameterliste wird an die InterWorking Funktion IWF_F gesendet. Diese Endeinrichtung erkennt zuerst, daß der Anruf an ein GSM-Netz weitergeleitet werden soll, dessen Übertragungarate 9.6kbit/s beträgt. Dies hat zur Folge, daß die Nutzdatenrate auf den kleineren Wert reduziert wird (PAR_IWF_F). Weiterhin stellt sich als Problem der eingestellte Modemtyp dar, nämlich das Autobaunding. Diese Einstellung wird in dem aufgeführten Beispiel nicht von der Interworking Funktion unterstützt. Von ihrer Seite schlägt sie demgemäß als mögliche Einstellung den Modemtyp: V.32 vor.

Nach dem Hinzufügen von eigenen Parametern PAR_IWF_F wird die Parameterliste von der InterWorking Funktion IWF_F an das Mobiltelefon MS_F des GSM-Benutzer PC_F versendet. Die Parameter des Endgerätes PAR_MS_F erlauben jedoch in dem aufgeführten Anwendungsbeispiel eine Übertragungsrate von höchstens 4.8 kbit/s. Das heißt, dieser Wert ist wieder kleiner als er ursprünglich von PC_E gesetzt wurde.

Dieser Wert wird in die Parameterliste eingetragen PAR_MS_F. Nach dem Zufügen von eigenen Parametern PAR_MS_F wird die vollständige Parameterliste an die kommunikationsinitialisierende Vorrichtung PC_E gesendet, von der die Entscheidung der Parameterwahl vorgenommen wird. Dies bedeutet insbesondere, daß diese entscheiden muß, ob der von ihr gewählte Service mit dieser Übertragungsrate, 4.8kbits/s, ausgeführt werden kann. Dies ist nämlich der einzige Wert, der auf der Übertragungsstrecke von allen Vorrichtungen unterstützt wird. Für den Fall, daß diese Verbindungsparameter den Mindestanforderungen des Dienstes nicht entsprechen, kann der Benutzer entscheiden mit der Datenübertragung nicht fortzufahren und er kann die bereits aufgebaute Verbindung abbauen.

Die Ausführbarkeit der Beispiele setzt als eine Anforderung voraus, daß eine minimale Verbindung zwischen den kommunizierenden Einheiten bereits vorhanden ist. Eine minimale Verbindung bedeutet an dieser Stelle, daß die Gegenstellen über eine Verbindung miteinander verbunden sind, die zwar für einen Datenaustausch nicht ausreichend ist, die aber genügt, um festzustellen über welches Hardware, z.B. digital, analog die Gegenstelle verfügt.

Dies kann durch den folgenden Vorschlag realisiert werden. Seit 1998 ist der ITU-T V.32 Modemtyp standardisiert, das heißt, alle analogen Modems können bezüglich dieses Standards konfiguriert werden. Für die digitalen Verbindungen sind die Rahmenbedingungen durch die im folgenden aufgeführte Parameter klar gesetzt. Eine Möglichkeit einer Aufstellung einer minimalen Verbindung zu einer Gegenstelle besteht mit Einsatz folgender Parameter. Eine asynchrone Verbindung mit 4.8kbit/s als Übertragungsgeschwindigkeit. Weiterhin werden die Daten auf 8 Bits ohne die Setzung eines Priritätsbits kodiert. Das bedeutet somit, es werden Parameter ausgewählt, die von fast allen in der Praxis vorkommenden Kommunikationsvorrichtungen unterstützt werden. Mit diesen Parameter kann zwar keine optimale Datenübertragung realisiert werden, es ist jedoch ausreichend, um einige 100 Bytes von Informationen auszutauschen. Im Prinzip kann eine Verbindung mit den erwähnten Parametern immer realisiert werden, die einzige Voraussetzung dafür ist, daß auf den kommunizierenden Vorrichtungen die angeschlossene Leitung nach ankommenden Daten abgehört wird.

In den aufgeführten Beispielen wurden verschiedene heterogene Netzwerkverbindungen erwähnt. Es wurden vorzugsweise Verbindungen zwischen digitalen und analogen Netzen in Betracht gezogen. Die Erfindung kann aber auch auf andere heterogene Verbindungen angewendet werden, beispielsweise bei Verbindung zwischen leitungsorientierten und paketorientierten Netzen. Weiterhin soll berücksichtigt werden, daß aufgrund dessen, daß die Art und die Anzahl der Kommunikationsparameter von dem darunterliegenden Netz abhängt nicht alle Kommunikationsparameter behandelt wurden. Die Erfindung ist aber auf alle Kommunikationsparameter anwendbar, die während der Verbindungsaufbauphase ausgehandelt werden müssen.

## Patentansprüche

1. Verfahren für eine optimierte Aushandlung von Kommunikationsparametern bei einer Übertragung von Daten in Nachrichtenverbindungen,
- bei dem eine Parameterliste in einer ersten Vorrichtung initialisiert wird und,
- bei dem mindestens eine weitere in die Übertragung involvierte Vorrichtung in die Parameterliste eigene Kommunikationsparameter hinzufügt und die Parameterliste an eine folgende, in die Übertragung involvierte Vorrichtung weiterleitet und,
- bei dem die bei einer Zielvorrichtung empfangene Parameterliste an die erste Vorrichtung zurückgesendet wird und,
- bei dem die erste Vorrichtung eine Auswahl mindestens eines Kommunikationsparameters vornimmt und,
- bei dem die getroffene Auswahl mindestens eines Kommunikationsparameters den weiteren in die Übertragung involvierten Vorrichtungen mitgeteilt wird.

2. Verfahren nach Anspruch 1 dadurch gekennzeichnet, daß, jede Kommunikationsvorrichtung durch eine eindeutige Identifikationsnummer identifiziert ist.

3. Verfahren nach Anspruch 1, bei dem jeder Kommunikationsparameter durch einen standardisierten Namen identifiziert wird.

4. Verfahren nach Anspruch 3, bei dem die Art und die Anzahl der Kommunikationsparameter von einem verwendeten Kommunikationsnetz abhängen.

5. Verfahren nach Anspruch 4, bei dem das Kommunikationsnetz ein digitales, ein analoges, ein paketorientiertes oder ein leitungsorientiertes Netz ist.

6. Verfahren nach Anspruch 5, bei dem eine heterogene Verbindung aus mindestens zwei Kommunikationsnetzen besteht.

7. Verfahren nach Anspruch 5, bei dem die Parameterliste die Identitikationsnummer und die Kommunikationsparameter jeder passierten Kommunikationsvorrichtung enthält.

8. Verfahren nach Anspruch 6, bei dem ein Kommunikationsparameter in der nachfolgenden Kommunikationsvorrichtung nicht überschrieben wird.

9. Verfahren nach Anspruch 7, bei dem eine Aushandlung der Kommunikationsparameter in einer Verbindungsaufbauphase durchgeführt wird.

10. Verfahren nach Anspruch 8, bei dem bei nicht erfolgreich durchgeführter Parameteraushandlung eine neue Aushandlung initiiert wird.

11. Verwendung des Verfahrens nach Anspruch 1 zur Aushandlung von Parametern bei Verbindungen, die über ein ISDN Netz von einem GSM Netz zu einem GSM Netz verlaufen.

12. Verwendung des Verfahrens nach Anspruch 1 zur Aushandlung von Parametern bei Verbindungen, die von einem GSM zu einem PSTN Netz verlaufen.

13. Verwendung des Verfahrens nach Anspruch 1 zur Aushandlung von Parametern bei Verbindungen, die von einem PSTN zu einem GSM Netz verlaufen.

14. Vorrichtung für eine optimierte Aushandlung von Kommunikationsparametern bei einer Übertragung von Daten bei Nachrichtenverbindungen, mit
- Mitteln zur Initialisierung einer Parameterliste,
- Mitteln zum Empfangen der Parameterliste,
- Mitteln zum Hinzufügen von eigenen Kommunikationsparametern,
- ersten Sendemittel zum Senden der Parameterliste an die folgende Vorrichtung,
- zweiten Sendemittel zum Senden der Parameterliste an die erste Vorrichtung,
- Mitteln zur Auswahl mindestens eines Kommunikationsparameters,
- Mitteln zur Auswertung der Parameterliste,
- Mitteln zur Konfiguration der Parametereinstellungen.
